# EUROPEAN PATENT APPLICATION

(11) **EP 3 106 977 A1**
(43) Date of publication of application: **21.12.2016**
(21) Application number: 16175042.7
(22) Date of filing: 17.06.2016
(51) Int. Cl.: G06F 3/12, H04N 1/46

(54) **IMAGE PROCESSING APPARATUS**

(30) Priority: 18.06.2015 JP 2015122643
(71) Applicant: Seiko Epson Corporation, Tokyo 160-8801 (JP)
(72) Inventor: OKAWA, Taisuke, Suwa-shi, Nagano 392-8502 (JP)
(74) Representative: Miller Sturt Kenyon

(57) **Abstract**

The color of the display on a display section and the color of a print product can be readily matched. An image processing apparatus includes a display section for displaying an image, a display adjustment section for adjusting display characteristics of the display section, and a print setting section for setting a medium onto which the image is to be printed. The display adjustment section adjusts the display characteristics based on the information of the medium set using the print setting section.

## Description

### BACKGROUND

### 1. Technical Field

The present invention relates to an image processing apparatus.

### 2. Related Art

Some traditional image processing apparatuses perform display adjustment on data of an image to be displayed. By this display adjustment, characteristics of the image to be reproduced on a display device are matched or approximated to color reproduction characteristics of an image to be printed by a printing device (for example, see JP-A-2008-99240).

The reproduced color of an image printed on a medium varies depending on media because various different types of media are used in different printing apparatuses and the individual media have different color reproduction characteristics. Consequently, for example, in the printing of images on various types of media, the reproduced colors of the images printed on the media are not always the same as the colors of the images displayed on display devices.

### SUMMARY

The present invention has been made to solve at least a part of the above-described problems, and can be implemented as the following embodiments or application examples.

### Application Example 1

According to an aspect of the invention, an image processing apparatus includes a display section for displaying an image, a display adjustment section for adjusting display characteristics of the display section, and a print setting section for setting a medium onto which the image is to be printed. The display adjustment section adjusts the display characteristics based on the information of the medium set using the print setting section.

This configuration enables a user to adjust the display characteristics of the display section based on the information of various kinds of media such as color reproduction characteristics. Consequently, the color of the image displayed on the display section and the color of the image to be printed on the medium can be readily matched to each other. Further, the color of the image to be printed can be checked on the display section before the printing is executed.

### Application Example 2

The display adjustment section of the image processing apparatus according to the above-described application example adjusts the display characteristics based on a ground color of the set medium.

This configuration enables a user to adjust the display characteristics of the display section based on the ground color of the medium to be printed. Consequently, the color of the display image on the display section and the color of the print image to be printed on the medium can be readily matched to each other.

### Application Example 3

The display adjustment section of the image processing apparatus according to the above-described application example adjusts the display characteristics based on a liquid fixing property of the surface of the set medium.

This configuration enables a user to adjust the display characteristics of the display section based on the liquid fixing property of the surface of the medium to be printed. Consequently, the color of the display image on the display section and the color of the print image to be printed on the medium can be readily matched to each other. Application Example 4

The image processing apparatus according to the above-described application example includes a plurality of the display sections. The display adjustment section adjusts the display characteristics of the display sections for checking the image to be printed.

This configuration enables a user to separately use, for example, among the plurality of display sections, some display sections for editing of the image and the other display sections for displaying the image whose display characteristics have been adjusted. Accordingly, the workability can be increased.

### Application Example 5

The image processing apparatus according to the above-described application example includes a color adjustment section for adjusting the color of the image to be displayed on the display section. The color adjustment section adjusts the color based on the information of the medium set using the print setting section.

This configuration enables a user to adjust the color of the image to be displayed on the display section based on the information of various kinds of media such as color reproduction characteristics. Consequently, the color of the print product can be readily adjusted to desired color.

### BRIEF DESCRIPTION OF THE DRAWINGS

Embodiments of the invention will now be described by way of example only with reference to the accompanying drawings, wherein like numbers reference like elements.
Fig. 1 is a schematic block diagram showing the configuration of a printing system.
Fig. 2 is a block diagrams showing the configuration of an image processing section.
Fig. 3 is a schematic view showing a setting screen for setting paper to be printed.
Fig. 4 is a flowchart showing a method for controlling the image processing apparatus.

### DESCRIPTION OF EXEMPLARY EMBODIMENTS

The invention will be described with reference to the accompanying drawings. In each drawing hereinafter, to make each component and the like be a size that is recognizable, the scale of each component and the like is shown different from actuality.

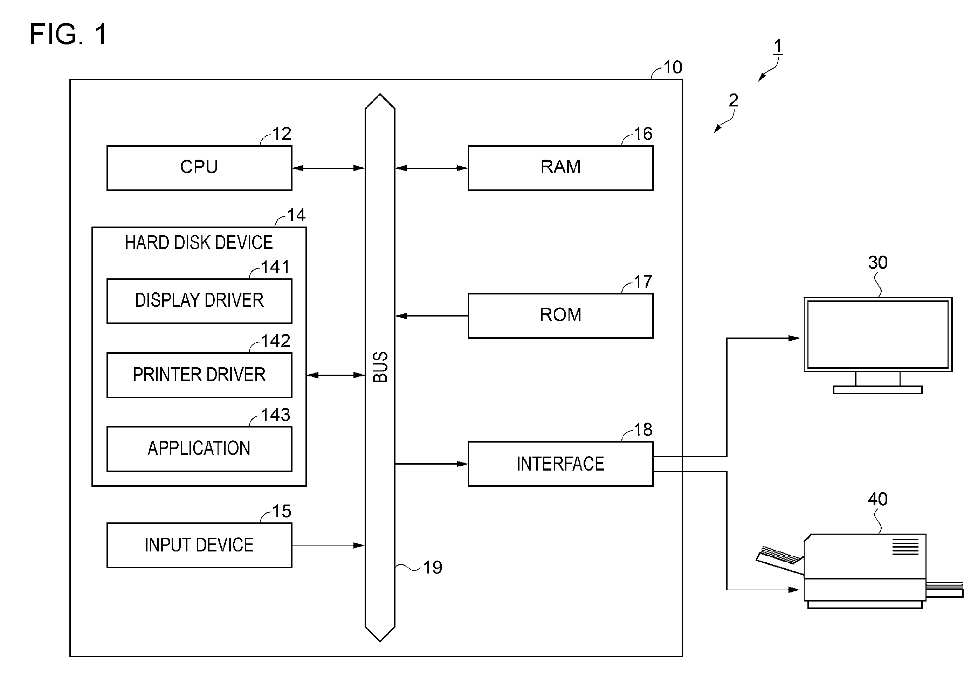

First, the configuration of an image processing apparatus is described. The image processing apparatus includes a display section for displaying images, a display adjustment section for adjusting display characteristics of the display section, and a print setting section for setting a medium on which an image is to be printed. The display adjustment section adjusts the display characteristics based on the information of the medium set using the print setting section. In this embodiment, an example configuration of a printing system that includes the image processing apparatus is described. Fig. 1 is a block diagram illustrating the configuration of the printing system. As shown in Fig. 1, a printing system 1 includes an image processing apparatus 2 and a printer 40 that serves as a printing section. The image processing apparatus 2 includes a computer 10 that serves as an image processing section, and a display 30 that serves as a display section.

The computer 10 is, for example, a traditional general-purpose computer to be used by a user. The computer 10 includes a central processing unit (CPU) 12 that performs various kinds of control processing, a random access memory (RAM) 16 that temporarily stores data, a read-only memory (ROM) 17 that stores various control programs, a hard disk device 14 that is a large-capacity memory for storing various application programs and various data files, an input device (for example, a keyboard and a mouse) 15 that enables a user to input an instruction, and an interface 18 that is connectable to the display 30, the printer 40, and other components. These components are connected to each other to exchange data via a bus 19. The method of connecting the display 30 and the computer 10, and the method of connecting the printer 40 and the computer 10 are not limited to the above-described method, and alternatively, the components may be connected via a serial bus such as a universal serial bus (USB), or via a network such as a wireless local area network (LAN).

The hard disk device 14 stores a display driver 141 that is used to send a display job to the display 30 for display processing, and a printer driver 142 that is used to send a print job to the printer 40 for print processing. The hard disk device 14 stores display characteristic adjustment information and other information for adjusting the display characteristics of the display 30 depending on paper that serves as a medium on which printing is to be performed with the printer 40. The display characteristic adjustment information includes, for example, types (e.g., high-quality paper, coated paper, and recycled paper) of paper, ground colors (base colors) of the paper, and fixing properties (wetting and spreading properties) of liquids (e.g., inks) on the surface of paper, and further includes display adjustment data for adjusting the display characteristics of the display 30 depending on the characteristics of the individual paper. The display adjustment data includes, for example, color temperatures, color tones, and tone curves of the individual paper acquired in advance, for example, by calibration of the display 30. The display characteristic adjustment information is not limited to the above-described information, and the information may further include, for example, materials of the paper, and the surface roughness, and further include display adjustment data corresponding to the information of the individual paper.

The computer 10 has a function of implementing the operation corresponding to a user's input operation via a cursor or the like displayed on the display 30 using the input device 15 such as a keyboard or a mouse. The computer 10, for example, issues an instruction of display processing to the display 30, issues an instruction of print processing to the printer 40, or displays the information of the printer 40, according to the installed programs. The display 30 is, for example, a color liquid crystal display, a cathode-ray tube (CRT), or a color organic electroluminescence display device. The printer 40 is, for example, an ink jet printer that discharges inks of four colors of cyan, magenta, yellow, and black for printing. The number of colors of the inks is not limited to four, and more colors may be discharged for printing.

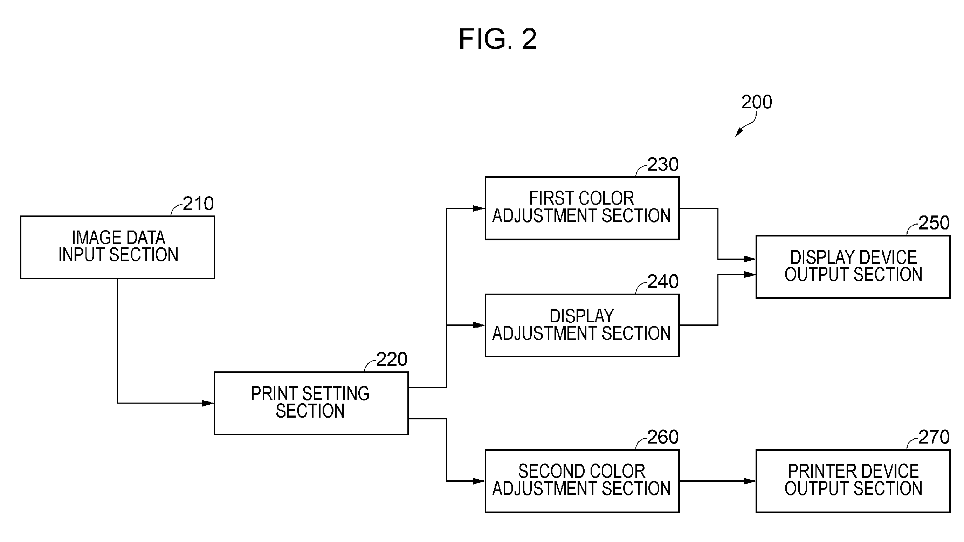

Next, the configuration of the image processing section is described. Fig. 2 is a block diagram of the configuration of the image processing section. An image processing section 200 is configured on the computer 10, for example, by executing application programs according to instructions from the CPU 12.

As shown in Fig. 2, the image processing section 200 includes an image data input section 210, a print setting section 220, a first color adjustment section 230 that serves as a color adjustment section, a display adjustment section 240, and a display device output section 250. The image processing section 200 further includes a second color adjustment section 260 and a printer device output section 270. These functional sections and the like are implemented by the cooperation of the hardware and software in the computer 10.

The image data input section 210 has a function of acquiring image data. Specifically, an image file is opened, and the image data is input. The input image data is written in a predetermined area on the RAM 16.

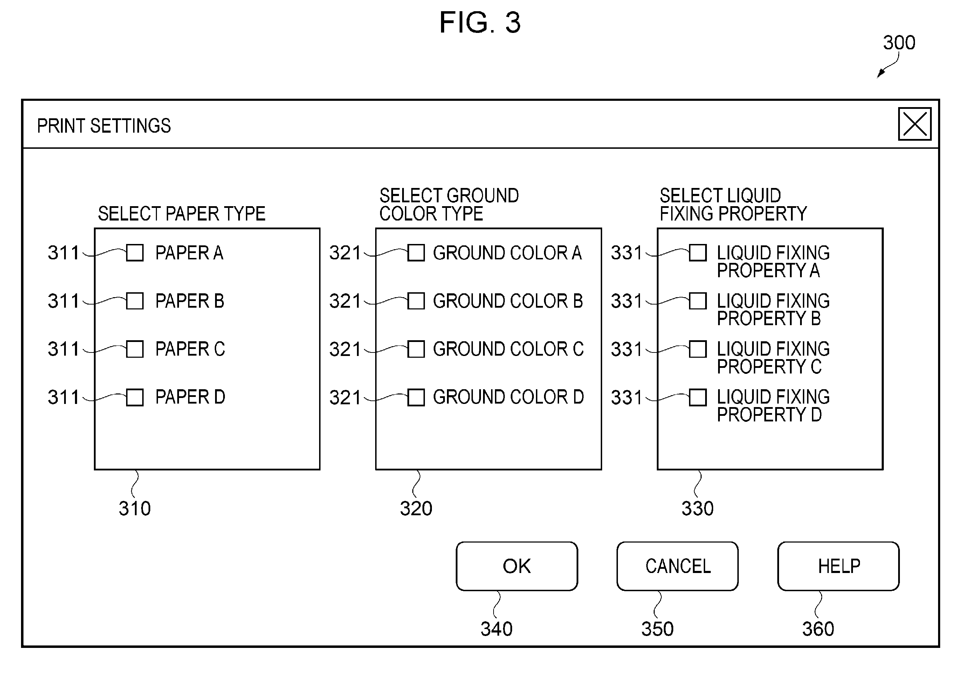

The print setting section 220 has a function of setting (selecting) paper on which an image is to be printed with the printer 40. Fig. 3 is a schematic view showing a setting screen for setting paper for printing. As shown in Fig. 3, a setting screen 300 includes settings (options) of paper types, and also includes paper setting items. The setting screen 300 is displayed, for example, by selecting the paper setting using an application 143.

The setting screen 300 according to the embodiment includes a section 310 for selecting a paper type, a section 320 for selecting a ground color of the paper, a section 330 for selecting a liquid fixing property on the surface of the paper, an OK button 340, a cancel button 350, and a help button 360. If a paper type is selected, the ground color of the paper and the liquid fixing property of the paper corresponding to the selected paper may be automatically selected from the display characteristic adjustment information. In such a case, the display of the paper ground color selection section 320 and the paper surface liquid fixing property selection section 330 may be omitted from the setting screen 300. It is preferable to select and set the ground color and the liquid fixing property corresponding to the content of processing if some processing such as modifications to the paper surface state, coating on the paper surface, adjustment of the amount of moisture of the paper, or adjustment of the temperature of the paper is performed and the state of the paper is different from the ground color and the liquid fixing property corresponding to the type of paper, or the paper has changed from the state corresponding to the type of paper. Alternatively, after the paper ground color selection section 320 and the paper surface liquid fixing property selection section 330 are displayed and the processed state is checked, a ground color and a liquid fixing property may be selected.

The paper type selection section 310 is used to set (select) a type of paper on which printing is performed with the printer 40 from a plurality of displayed paper types. For example, high-quality paper, coated paper, and recycled paper could be displayed as the paper types A-D. The user can check a check box 311 corresponding to the individual paper to set (select) a paper type.

The paper ground color selection section 320 is used to set (select) a ground color of the paper on which printing is performed with the printer 40 from a plurality of displayed ground colors. The different types of paper have individual ground colors, and consequently, the printed colors may differ depending on the types of paper although the printing is performed with the same amount of ink. Consequently, the display color can be adjusted to a color similar to the print color by performing color conversion processing by reflecting the ground color of the paper. The ground colors to be displayed may be, for example, in a case of white-based colors, white, milk white, lead white, and grayish white. The user can select a check box 321 corresponding to the individual ground color to set (select) the type of ground color of the paper. It is preferable that the user can specify a color value of the ground color of paper measured in advance to increase the accuracy of paper ground color setting. Alternatively, the color value of the ground color of the paper measured in advance may be included in the display characteristic adjustment information, and the ground color of the paper may be set by selecting the type of paper.

The paper surface liquid fixing property selection section 330 is used to set (select) the liquid fixing property of the paper on which printing is performed with the printer 40 from a plurality of displayed liquid fixing properties. The different types of paper have individual liquid fixing properties, and the printed colors may differ depending on the types of paper due to the ink absorption state and the ink wetting state on the paper surfaces although the printing is performed with the same amount of ink. Consequently, the display color can be adjusted to a color similar to the print color by performing color conversion processing by reflecting the liquid fixing property of the paper. The liquid fixing property is displayed, for example, as low, medium, or high. The user can check a check box 331 corresponding to the individual liquid fixing property to set (select) the liquid fixing property of the paper. It is preferable that the user can specify a predefined liquid fixing property of the paper to increase the accuracy of paper liquid fixing property setting. Alternatively, the predefined liquid fixing property of the paper may be included in the display characteristic adjustment information, and the liquid fixing property of the paper may be set by selecting the type of paper.

The OK button 340 is used to confirm the settings selected on the setting screen 300. The cancel button 350 is used to stop and close the setting screen 300. The help button 360 is used to display the information about the operation of the setting screen 300.

The first color adjustment section 230 of the image processing section 200 has a function of adjusting the color of an image to be displayed on the display 30 based on the information of the paper set using the print setting section 220. Specifically, a color conversion program included in an application program is loaded in the first color adjustment section 230. The first color adjustment section 230 has a function of converting input image data into a first profile connection space by applying a source program file provided in an image file of the image data to each image. The first color adjustment section 230 also includes a function of converting the first profile connection space into a second profile connection space by applying a medium profile corresponding to the paper (print medium) to be printed with the printer 40 to the image data that is associated with the source profile. The first color adjustment section 230 also includes a function of converting the second profile connection space into a predetermined color space by applying a display profile corresponding to the display 30 to the image data associated with the medium profile. In this embodiment, an International Color Consortium (ICC) profile is applied to each of the color space conversion processes (color adjustment).

The display adjustment section 240 has a function of adjusting display characteristics of the display 30 based on the information of the paper set using the print setting section 220. Specifically, the display adjustment section 240 acquires data for display adjustment for adjusting the display characteristics of the display 30 based on the information (e.g., the paper type, the ground color, and the liquid fixing property) of the paper to be printed with the printer 40. The display adjustment section 240 acquires, for example, color temperature data. Consequently, the image display adjusted for the paper to be printed can be provided on the display 30 by applying the acquired color temperature data to the adjustment of the display 30. The hard disk device 14 stores the display adjustment data of the display 30 corresponding to the information of the paper to be printed with the printer 40.

The display device output section 250 transmits data transmitted from the first color adjustment section 230 and the display adjustment section 240 to the display driver 141. The printer driver 142 generates display data from the color adjustment data and the display adjustment data. The generated display data is transmitted to the display 30, and the image is displayed on the display 30.

A color conversion program included in an application program has been loaded in the second color adjustment section 260. The second color adjustment section 260 converts the first profile connection space into a predetermined color space by applying a source program file provided in the image file of the input image data to each image. The second color adjustment section 260 has a function of converting the first profile connection space into a predetermined color space by applying an output profile corresponding to the paper (print medium) to be printed with the printer 40. The color space conversion (color adjustment) processing in this embodiment is implemented by applying an ICC profile.

The printer device output section 270 transmits the data transmitted from the second color adjustment section 260 to the printer driver 142. The printer driver 142 has functions such as a resolution conversion function of converting the resolution of the image to be printed based on the transmitted color conversion data, a color conversion function of converting color image data of RGB into ink amount data for each color to be used for the printing, a half tone function of generating dot forming data for each print pixel by performing half tone processing for each ink, and a data array function of providing the dot forming data in a predetermined array. The printer driver 142 generates print data. The generated print data is transmitted to the printer 40, and the image is printed on the set paper in the printer 40.

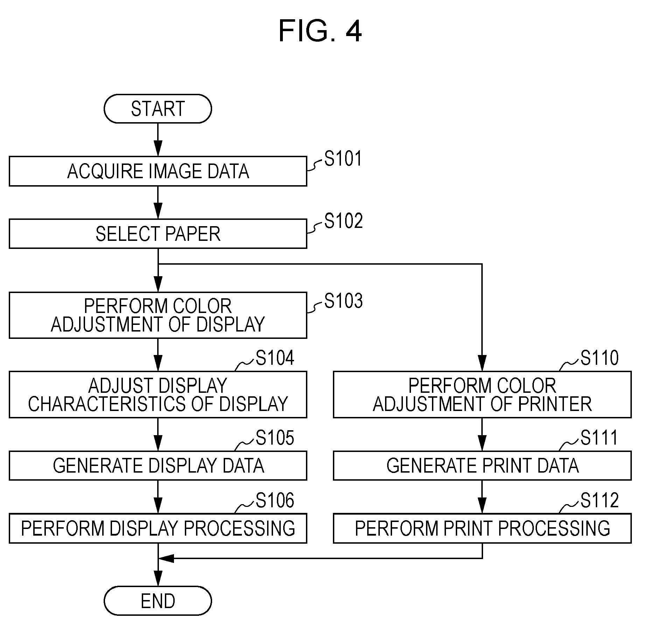

Now, a method of controlling the image processing apparatus will be described. Fig. 4 is a flowchart of the method of controlling the image processing apparatus.

As shown in Fig. 4, first, target image data is acquired (step S101). Specifically, image data is input via the image data input section 210, and written on the RAM 16.

Then, paper is selected (step S102). Specifically, paper to be printed with the printer 40 is selected using the print setting section 220. With this paper selection, the characteristic information of the paper is set. The characteristic information of the paper that can be acquired in this step includes, for example, the paper type, the ground color of the paper, and the liquid fixing property of the surface of the paper.

After step S102, a part of the processing of adjusting the color of the image on the display 30 is performed (step S103). Specifically, the first color adjustment section 230 performs the color conversion processing based on the characteristic information of the paper set using the print setting section 220.

Then, a part of the processing of adjusting the display characteristics of the display 30 is performed (step S104). Specifically, the display adjustment section 240 acquires the display adjustment data for adjusting the display characteristics of the display 30 based on the information of the paper set using the print setting section 220. The display adjustment data includes, for example, color temperatures and color tone data.

Then, display data is generated (step S105). Specifically, the color conversion data and the display adjustment data are transmitted to the display driver 141 via the display device output section 250, and the display driver 141 generates the display data based on the transmitted color conversion data and display adjustment data.

The generated display data is transmitted to the display 30, and the image is displayed on the display 30 (step S106).

After the selection of the paper in step S102, a part of the adjustment of the color of the image to be printed with the printer 40 is performed (step S110). Specifically, the second color adjustment section 260 performs the color conversion processing based on the characteristic information of the paper selected using the print setting section 220.

Then, print data is generated (step S111). Specifically, the color conversion data is transmitted to the printer driver 142 via the printer device output section 270, and the printer driver 142 generates print data based on the transmitted color conversion data.

The generated print data is transmitted to the printer 40, and the image is printed on the paper in the printer 40 (step S112). Of course, if the user decides not to print the image after viewing it on the display, steps S110 to S112 are not carried out. Similarly, the printing steps S110 to S112 can be carried our without performing the display steps S103-S106.

While the exemplary embodiment of the present invention has been described with reference to the attached drawings, it is to be understood that the specific configurations are not limited to the configurations according to the embodiment, design choices can be made without departing from the scope of the disclosure. For example, in the above-described embodiment, a part of the configuration implemented by the hardware may be replaced with and implemented by software, or a part of the configuration implemented by the software may be replaced with and implemented by hardware.

According to the above-described embodiments, the following advantages can be achieved.

On the display 30, an adjusted image is displayed by adjusting the image using display adjustment data based on the information of paper to be printed with the printer 40. Consequently, the display characteristics of the display 30 can be readily adjusted to display characteristics appropriate for the paper to be printed. Furthermore, the color of the image displayed on the display 30 and the color of the image to be printed on the paper to be printed with the printer 40 can be readily matched. Furthermore, the display characteristics of the display 30 can be automatically adjusted by selecting paper to be printed with the printer 40 when settings relating to the printing in the print setting section 220 or other components are set. This eliminates the need for the user's operation for performing display adjustment of the display 30 for each paper, and leads to a reduction in man-hours. Furthermore, the color conversion between the display 30 and the printer 40 can be performed by selecting settings relating to the printer 40. This eliminates the need for individual adjustment of the display 30 and the printer 40, and leads to further reduction in man-hours.

It is to be understood that the invention is not limited to the disclosed embodiments, various modifications and changes of the embodiments can be made. Example modifications will be described below.

### Modification 1

In the image processing apparatus 2 according to the above-described embodiments, a single display 30 is connected to a single computer 10, however, the configuration is not limited to this example. Alternatively, a plurality of displays 30 may be connected to a single computer 10. In such a case, among the displays 30, the display characteristics of the displays 30 used to check the image to be printed with the printer 40 are adjusted. With this configuration, the workability can be increased, for example, among the displays 30, by using some displays 30 for editing of the image and using other displays 30 for displaying the image whose display characteristics have been adjusted respectively.

### Modification 2

In the above-described embodiments, a single printer 40 is connected to a single computer 10, however, the configuration is not limited to this example. For example, a plurality of printers 40 may be connected to a single computer 10. Alternatively, the printer 40 of different models may be connected to the computer 10. In such a case, the hard disk device 14 stores the display characteristic adjustment information and other information for adjusting the display characteristics of the displays 30 for paper to be printed for the respective printers 40. The print setting section 220 may be configured to select a printer 40 to be driven for printing from the printers 40 and set paper to be used in the selected printer 40. With this configuration, the workability can be further increased.

### Modification 3

In the above-described embodiments, in the print setting section 220, the paper type, the ground color of the paper, and the liquid fixing property of the paper are separately selected, however, the configuration is not limited to this example. For example, these items may be freely selected. Specifically, only the paper type may be selected, and the other items may be associated with the paper type and included in the display characteristic adjustment information. Then, depending on the selected paper, the other items may be selected, set, and reflected on the display adjustment. With this configuration, the display adjustment reflecting the properties of the paper to be printed can be performed. The characteristic information of the paper may be specified and the color conversion processing may be performed in the color adjustment section based on the paper selected by the printer driver 142.

### Modification 4

In the above-described embodiments, the ICC profile is applied and the color conversion processing is performed in the first color adjustment section 230 and the second color adjustment section 260, however, the configuration is not limited to this example. For example, the color conversion may be performed using a color conversion function provided in the display driver 141 or the printer driver 142. With this configuration, advantages similar to those in the above-described embodiments can also be achieved.

## Claims

1. An image processing apparatus (1) comprising:
a display section (30) for displaying an image;
a display adjustment section (240) for adjusting display characteristics of the display section; and
a print setting section (142) for setting a medium onto which the image is to be printed,
wherein the display adjustment section is configured to adjust the display characteristics based on the information of the medium set using the print setting section.

2. The image processing apparatus according to claim 1, wherein the display adjustment section is configured to adjust the display characteristics based on a ground color of the set medium.

3. The image processing apparatus according to claim 1 or claim 2, wherein the display adjustment section is configured to adjust the display characteristics based on a liquid fixing property of the surface of the set medium.

4. The image processing apparatus according to any one of the preceding claims, further comprising:
a plurality of the display sections (30),
wherein the display adjustment section is configured to adjust the display characteristics of the display sections for checking the image to be printed.

5. The image processing apparatus according to any one of the preceding claims, further comprising:
a color adjustment section (230) for adjusting the color of the image to be displayed on the display section,
wherein the color adjustment section is configured to adjust the color based on the information of the medium set using the print setting section.
